Europäisches Patentamt

European Patent Office

Office européen des brevets

(19)

(11) **EP 1 490 526 B1**

(12) **FASCICULE DE BREVET EUROPEEN**

(45) Date de publication et mention
de la délivrance du brevet:
**15.06.2005 Bulletin 2005/24**

(21) Numéro de dépôt: **03740548.7**

(22) Date de dépôt: **01.04.2003**

(51) Int Cl.⁷: **C22C 38/44**, C22C 38/46,
C22C 38/58, C22C 38/60,
C22C 38/42

(86) Numéro de dépôt international:
**PCT/FR2003/001013**

(87) Numéro de publication internationale:
**WO 2003/083153 (09.10.2003 Gazette 2003/41)**

(54) **BLOC EN ACIER POUR LA FABRICATION DE MOULES D INJECTION DE MATIERE PLASTIQUE OU POUR LA FABRICATION DE PIECES POUR LE TRAVAIL DES METAUX**

**BLOCKSTAHL ZUR HERSTELLUNG VON SPRITZGUSSFORMEN FÜR KUNSTSTOFFMATERIAL ODER ZUR HERSTELLUNG VON WERKSTÜCKEN FÜR DIE METALLBEARBEITUNG**

**BULK STEEL FOR THE PRODUCTION OF INJECTION MOULDS FOR PLASTIC MATERIAL OR FOR THE PRODUCTION OF PIECES FOR WORKING METALS**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **03.04.2002 FR 0204115**

(43) Date de publication de la demande:
**29.12.2004 Bulletin 2004/53**

(73) Titulaire: **INDUSTEEL FRANCE**
**92800 Puteaux (FR)**

(72) Inventeur: **BEGUINOT, Jean**
**F-71200 Le Creusot (FR)**

(74) Mandataire: **Lagrange, Jacques**
**Cabinet Lavoix**
**2, place d'Estienne d'Orves**
**75441 Paris Cedex 09 (FR)**

(56) Documents cités:
**EP-A- 0 431 557          EP-A- 0 709 481**
**EP-A- 0 725 156          EP-A- 0 792 944**
**EP-A- 0 805 220          EP-A- 0 882 808**
**EP-A- 1 069 198          US-A- 3 615 879**
**US-A- 5 013 524**

• **PATENT ABSTRACTS OF JAPAN vol. 1996, no. 10, 31 octobre 1996 (1996-10-31) -& JP 08 165542 A (DAIDO STEEL CO LTD), 25 juin 1996 (1996-06-25)**

EP 1 490 526 B1

**Description**

La présente invention est relative à un bloc en acier utilisable, notamment, pour la fabrication de moules pour le moulage par injection de matières plastiques ou pour le moulage des métaux tels que les alliages légers ou pour la fabrication de pièces pour le travail des métaux.

Les moules pour le moulage par injection de matières plastiques sont, en général, réalisés en aciers dont la dureté est voisine de 300HB. Cependant, lorsque ces moules sont utilisés pour le moulage de plastiques tels que les plastiques techniques ou les plastiques thermodurcissables, il est préférable d'utiliser des aciers plus durs résistant mieux à l'usure. On peut alors utiliser un acier tel que le 55 NCDV 7 contenant environ 0,55% de carbone, 1,75% de nickel, du chrome, du molybdène et du vanadium qui permet de fabriquer des moules dont la dureté est voisine de 400 HB. Cet acier présente cependant plusieurs inconvénients : il est difficile à usiner et difficile à souder. En outre, cet acier comporte souvent des ségrégations localisées qui constituent des points durs préjudiciables à l'aptitude au polissage ou au grainage chimique. Ces deux inconvénients sont particulièrement gênants car la fabrication des moules nécessite des usinages importants et les moules sont généralement réparés par rechargement par soudure et polis ou grainés. En outre, ces moules doivent pouvoir être durcis en surface, par exemple par nitruration, sans perdre leur dureté.

Pour des applications encore plus exigeantes et particulièrement quand les plastiques injectés sont chargés de fibres très dures, il est préférable d'utiliser des aciers encore plus durs, résistant mieux à l'usure. De même l'accroissement des pressions d'injection conduit également à rechercher des aciers plus résistants et donc plus durs. Enfin, pour certaines applications d'injection d'alliages légers ou de travail à froid ou à tiède des métaux, les contraintes mécaniques imposées à l'outillage et les exigences de tenue à l'usure conduisent à adopter des niveaux de dureté de l'acier supérieurs à 450HB. On peut alors chercher à utiliser un acier de résistance voisine de 450 voire 500 HB tel que par exemple les nuances AISI H11 ou H13 qui sont également couramment utilisées pour l'injection d'alliages légers. Ces aciers contiennent environ : 0,4% de carbone, 5% de chrome, 1,25% de molybdène, 0,3 à 1% de vanadium. Mais de tels aciers présentent, à un degré encore plus élevé, les mêmes d'inconvénients que le 55NCDV 7, évoqués plus haut.

En outre, un autre problème se pose de manière particulièrement cruciale avec l'accroissement de la dureté, laquelle s'accompagne presque inévitablement d'une réduction de ténacité : le risque de fissuration entre les canaux de refroidissement et la surface d'empreinte du moule, que ces canaux ont pour fonction de refroidir efficacement, en passant relativement près de cette surface.

Le but de la présente invention est de remédier à ces inconvénients en proposant un acier pour moules ou pour la fabrication de pièces pour le travail des métaux plus facilement soudable, plus facile à usiner, à polir et à grainer et plus conducteur de la chaleur que les aciers selon l'art antérieur, et permettant de fabriquer des moules ou des outils ayant une dureté de l'ordre de 450 à plus de 500 HB, y compris après une opération de durcissement en surface par nitruration, ce qui impose que les caractéristiques requises, notamment en dureté, soient compatibles avec un revenu à une température supérieure à 530°C.

A cet effet, l'invention a pour objet un bloc en acier d'épaisseur supérieure à 20 mm et pouvant aller jusqu'à 1500mm, dont la structure est martensitique ou martensito-bainitique, dont la dureté est comprise entre 430 HB et 530 HB environ en tous points, destiné à la fabrication de pièces pour moules ou pour outillage, et dont la composition chimique comprend, en % en poids :

$$0,180\% \leq C \leq 0,400\%$$

$$Si \leq 0,8\%$$

$$Mn \leq 2,5\%$$

$$Ni \leq 3\%$$

$$Cr \leq 3,5\%$$

$$Mo+W/2 \leq 2,8\%$$

$$V + Nb/2 + Ta/4 \leq 0,5\%$$

$$Al \leq 0,4\%$$

$$Ti + Zr/2 \leq 0,1\%$$

- du bore en une teneur comprise entre 0,0005% et 0,015%,
- éventuellement un ou plusieurs éléments pris parmi le soufre, le sélénium et le tellure, la somme des teneurs en ces éléments étant inférieure ou égale à 0,2%,
- éventuellement un ou plusieurs éléments pris parmi le plomb et le bismuth, la somme des teneurs en ces éléments étant inférieure ou égale à 0,2%,
- éventuellement du calcium en une teneur inférieure ou égale à 0,1 %,

le reste étant du fer et des impuretés résultant de l'élaboration, le cuivre étant une impureté, la composition chimique satisfaisant en outre les relations suivantes :

$$3,2 \leq Tr \leq 9$$

$$85 < Dr \leq 95$$

$$U/Dr \leq 10,0$$

$$Mo^* + 3xV^* \geq 0,4\%$$

dans lesquelles, pour des teneurs exprimées en % :

$$Tr = 1,8xC + 1,1xMn + 0,7xNi + 0,6xCr + 1,6xMo^* + 0,5$$

$$Dr = 54xC^{0,25} + 24,5x(Mo^* + 3xV^*)^{0,30} + 1,58xMn + 0,74xNi + 1,8xSi + 12,5x(Cr)^{0,20}$$

$$U = 1600xC + 100x(0,25xCr + Mo^* + 4,5xV^*)$$

$$R = 3,8xC + 10xSi + 3,3xMn + 2,4xNi + 1,4x(Cr + Mo^*)$$

$$Mo^* = Mo + W/2$$

$$V^* = V + Nb/2 + Ta/4$$

et les teneurs en bore, aluminium, titane, zirconium et azote, exprimées en millièmes de % en poids, sont telles que :

$$B \geq \frac{1}{3} \times K1 + 0,5$$

avec K1 = Min (I* ; J*)
  I*= Max(0 ; I)     et     J*=Max(0 ; J)

I = Min(N ; N-0,29(Ti+Zr/2-5))

$$J = \mathrm{Min}\left( N ; 0,5\left( N - 0,52\ Al + \sqrt{(N - 0,52\,Al)^2 + 283}\right)\right).$$

De préférence, la composition chimique est telle que :

R > 11

De préférence également, la composition chimique est telle que :

R ≤ 2,7xTr

Il est préférable que la teneur en silicium reste strictement inférieure à 0,45% en poids.
De préférence, la composition est telle que : **R**/(2,7x**Tr**) ≤ 0,90, plus préférentiellement **R**/(2,7x**Tr**) ≤ 0,80.
De préférence, la composition est telle que **U/Dr** ≤ 9,0.
En outre, il est préférable que la composition chimique de l'acier soit telle que :

0,230 % ≤ C ≤ 0,350 %

Si ≤ 0,30 %

0,1 % < Mn ≤ 1,8 %

Ni ≤ 2,5 %

0,2 % ≤ Cr ≤ 3 %

Mo + W/2 ≤ 2,5 %

V + Nb/2 + Ta/4 ≤ 0,3 %

Mo* + 3xV* ≥ 0,8%

et mieux encore, telle que :

0,240 % ≤ C ≤ 0,320 %

Si ≤ 0,15 %

0,1 % ≤ Mn ≤ 1,6 %

$$Ni \leq 2\%$$

$$0,2\ \% \leq Cr \leq 2,5\ \%$$

$$0,3\ \% \leq Mo + W/2 \leq 2,5\ \%$$

$$V + Nb/2 + Ta/4 \leq 0,3\ \%$$

$$Mo^* + 3xV^* \geq 1,2\%$$

Il est alors préférable que la composition soit telle que **Tr** > 4,5.

L'invention concerne également une pièce de moule en acier usinée dans un bloc conforme selon l'invention, dont au moins une partie de la surface est durcie par nitruration et dont la dureté en tous points est comprise entre 430 HB et 530 HB.

L'acier selon l'invention a l'avantage d'avoir une meilleure conductibilité thermique que les aciers selon l'art antérieur. Cette meilleure conductibilité thermique permet de prévoir des canaux de refroidissement plus éloignés de la surface des moules que ce qu'exige l'utilisation d'aciers selon l'art antérieur. Ainsi, le risque de fissures entre les canaux et la surface de l'empreinte des moules est sensiblement réduit. De plus, du fait de la meilleure conductibilité thermique, le refroidissement des moules se fait de façon plus homogène, ce qui améliore la qualité du moulage.

L'acier selon l'invention est également destiné à fabriquer des pièces pour le travail des métaux.

L'invention va maintenant être décrite de façon plus précise mais non limitative et illustrée par des exemples.

Les pièces pour moules ou par travail des métaux sont fabriquées par usinage dans des blocs d'acier massifs trempés pour obtenir une structure martensitique ou martensito-bainitique et revenus pour obtenir les propriétés souhaitées de dureté et ductilité. Il est alors nécessaire d'utiliser un acier ayant une trempabilité élevée et une aptitude au durcissement importante. Mais ces aciers durcis doivent avoir une usinabilité la meilleure possible et une conductivité thermique la plus élevée possible. Cette dernière propriété est utile pour améliorer la productivité des opérations de moulage. A priori, la combinaison de ces différentes propriétés est contradictoire. En effet, il est connu que l'acier est d'autant moins facile à usiner qu'il est dur et il est connu d'améliorer l'usinabilité en ajoutant des éléments d'addition tels que le soufre, le calcium, le sélénium, le tellure ou le plomb. Mais, dans les aciers à moules ces additions doivent être limitées car, bien qu'elles soient acceptables lorsque la surface des empreintes des moules est grainée, elles sont néfastes quand les surfaces sont polies. En tout état de cause de telles additions sont insuffisantes. On sait également que la conductivité thermique de l'acier et sa trempabilité varient en sens inverse en fonction de sa composition. Ces exigences sont donc contradictoires. Cependant, les inventeurs ont constaté de façon nouvelle qu'il est possible de trouver des domaines de composition permettant d'obtenir des combinaisons de propriétés sensiblement meilleures que celles des aciers connus. Ces domaines de composition sont définis d'une part par des fourchettes de teneurs en chacun des éléments de la composition, et d'autre part, par des formules à respecter.

Pour obtenir de telles combinaisons de propriétés, l'acier doit contenir :

- de 0,18% à 0,4% de carbone pour former des carbures durcissant sans toutefois trop détériorer la soudabilité, la ténacité et l'usinabilité, de préférence, cette teneur doit être comprise entre 0,230% et 0,350%, et mieux encore, comprise entre 0,240% et 0,320% .
- moins de 0,8%, de préférence moins de 0,30% et mieux, moins de 0,15% de silicium. Cet élément utilisé généralement pour désoxyder l'acier au cours de l'élaboration a un effet défavorable sur la conductivité thermique. Cependant, il est toujours présent au moins à l'état de traces.
- moins de 2,5% de manganèse, et de préférence, de 0,1% à 1,8%, et mieux, de 0,1 % à 1,6%, pour obtenir une bonne trempabilité sans toutefois engendrer trop de ségrégations qui réduiraient l'aptitude à obtenir de bons. états de surface sur les moules. Cet élément est toujours présent au moins à l'état de traces. En outre, il est préférable que sa teneur soit supérieure à 0,1% afin de piéger le soufre toujours présent à l'état d'impuretés. Si du soufre a été ajouté pour améliorer l'usinabilité, la teneur minimale en manganèse doit être de préférence adaptée en conséquence et être d'au moins 5 fois, et de préférence 7 fois la teneur en soufre.
- Moins de 3 % de nickel, de préférence moins de 2,5% et mieux encore moins de 2%. Cet élément permet d'augmenter la trempabilité mais il est très coûteux. Il peut être présent à l'état de traces. Cependant, dans les applications requérant une forte ténacité et une très bonne homogénéité de dureté, il peut être intéressant de réduire la teneur en manganèse au profit du nickel à raison de deux parts de nickel en substitution d'une part de manganèse. Cette substitution d'une partie du manganèse par du nickel a aussi l'avantage de réduire les ségrégations.

- Moins de 3,5% de chrome, et de préférence de 0,2 % à 3% de chrome, et plus préférentiellement encore, de 0,2% à 2,5%. Cet élément permet d'augmenter la trempabilité, mais en trop forte quantité, il a tendance à enrichir les carbures en chrome au détriment d'autres éléments plus favorables tels que le molybdène, le tungstène, le vanadium, le niobium et le tantale. Il peut être présent à l'état de traces.

- Du molybdène et/ou du tungstène en des teneurs telles que la somme Mo* = Mo + W/2 soit inférieure à 2,8%, et de préférence inférieure à 2,5%, il est également préférable qu'elle soit supérieure à 0,3%. Ces éléments sont fortement trempant, en outre, ils réduisent sensiblement l'adoucissement au revenu, ce qui est souhaitable notamment lorsque les empreintes des moules sont soumises à des traitements de surface telles que la nitruration à des températures d'au moins 500°C. Cependant, en trop grande quantité, ils détériorent l'aptitude à l'usinage.

- Eventuellement au moins un élément pris parmi le vanadium, le niobium et le tantale en des teneurs telles que la somme V* = V + Nb/2 + Ta/4 soit inférieure à 0,5%, et mieux, inférieure à 0,3%. Ces éléments permettent d'augmenter la résistance à l'adoucissement au revenu, notamment lorsque le revenu est effectué au-dessus de 550°C. Ils permettent également d'augmenter la tenue à l'usure des empreintes des moules. Mais en trop forte quantité, ils détériorent l'usinabilité et la soudabilité.

- de 0,0005 % à 0,015 % de bore. Cet élément augmente sensiblement la trempabilité sans nuire à la conductivité thermique. De plus, son effet disparaissant aux températures d'austénitisation élevées rencontrées en soudage, il est favorable à une bonne aptitude à la réparation par soudure. En dessous de 0,0005%, qui est pratiquement la limite de détection par les moyens d'analyse, il n'a pas d'effet significatif. Au-dessus de 0,015% il engendre une fragilisation de l'acier sans augmenter la trempabilité.

Eventuellement jusqu'à 0,4% d'aluminium et éventuellement un ou plusieurs éléments pris parmi le titane et le zirconium, la somme Ti + Zr/2 pouvant aller jusqu'à 0,1%. Ces éléments sont des désoxydants forts. De plus ils fixent l'azote toujours présent au moins à titre d'impureté en des teneurs généralement inférieures à 0,0250% mais pouvant aller au delà, cependant, lorsque l'acier contient du bore la teneur en azote doit rester inférieure à 0,0250%. La présence d'au moins un élément pris parmi Al , Ti et Zr est souhaitable pour que le bore ait sa pleine efficacité.

Pour que l'aluminium, le titane et le zirconium, pris seuls ou en combinaison de deux ou trois de ces éléments, protègent le bore contre l'azote et lui confèrent ainsi sa pleine efficacité, les teneurs en bore, aluminium, titane, zirconium et azote, exprimées en millièmes de % en poids, doivent être telles que :

$$B \geq \frac{1}{3} \times K1 + 0,5$$

avec K1 = Min (I* ; J*)
$\quad$ I* = Max(0 ; I)$\qquad$ et $\qquad$ J* = Max(0 ; J)
$\quad$ I = Min(N ; N-0,29(Ti+Zr/2-5))

$$J = \operatorname{Min}\left( N ; 0,5\left( N - 0,52\ Al + \sqrt{(N - 0,52\,Al)^2 + 283} \right) \right).$$

- Le cuivre peut exister à l'état de traces ou d'impureté jusqu'à des teneurs de l'ordre de 0,3%.

- Eventuellement un ou plusieurs éléments pris parmi le soufre, le sélénium et le tellure en faible quantité, la somme des teneurs en ces éléments devant rester inférieure à 0,2%. Cependant, lorsque l'acier est destiné à la fabrication de moules dont la surface est polie et grainée chimiquement, la somme des teneurs en ces éléments doit rester inférieure à 0,025%, ou mieux, inférieure à 0,005%.

- Eventuellement un ou plusieurs éléments pris parmi le plomb et le bismuth, la somme des teneurs en ces éléments étant inférieure à 0,2%. Cependant, lorsque l'acier est destiné à la fabrication de moules dont la surface est polie et grainée chimiquement, il est préférable que l'acier ne contienne pas de tels éléments.

- Eventuellement du calcium en une teneur inférieure à 0,1%. Cependant, lorsque l'acier est destiné à la fabrication de moules dont la surface est polie et grainée chimiquement, il est préférable que l'acier ne contienne pas cet élément car son action positive sur l'usinabilité se réalise en conjonction avec le soufre dont l'addition est préférentiellement limitée quand l'acier doit être poli ou grainé.

- le reste de la composition est constitué de fer et d'impuretés résultant de l'élaboration. Il convient de noter que, pour tous les éléments d'addition dont la teneur minimale n'est pas imposée, lorsque ces éléments ne sont pas ajoutés, ils peuvent toujours se trouver au moins sous forme de résiduels ou d'impuretés, en des teneurs très faibles.

A l'intérieur des limites qui viennent d'être définies, la composition de l'acier doit être choisie afin obtenir les caractéristiques d'usage souhaitées. Pour cela, la composition doit être telle que :

- la grandeur Tr = 1,8xC + 1,1xMn +0,7xNi + 0,6xCr + 1,6xMo* + 0,5, soit supérieure à 3,2 et mieux supérieure à 4,5 pour obtenir une trempabilité suffisante. En particulier, Tr doit être supérieur à 4,5 pour permettre d'obtenir une structure martensito-bainitique sans trace de structure perlitique sur des pièces dont l'épaisseur peut dépasser 1000 mm et atteindre 1500mm.

- La grandeur **Dr** = $54xC^{0,25} + 24,5x(Mo* + 3xV*)^{0,30} + 1,58xMn + 0,74xNi + 1,8xSi + 12,5x(Cr)^{0,20}$ doit être comprise entre 85 et 95 afin d'obtenir un durcissement par les carbures suffisant sans toutefois trop détériorer l'usinabilité.

- La grandeur **U** = 1600xC + 100x(0,25xCr + Mo* + 4,5xV*) qui est un indicateur de l'usinabilité (plus il est faible, plus l'usinabilité est bonne), doit être tel que le ratio rendant compte de la difficulté d'usinage rapportée au durcissement, **U/Dr**, reste inférieur à 10,0 et de préférence à 9,0.

- La grandeur **R** = 3,8xC + 10xSi + 3,3xMn + 2,4xNi + 1,4x(Cr + Mo*) qui varie comme la résistivité thermique, c'est à dire l'inverse de la conductivité thermique, doit, de préférence, rester inférieure ou égal à 2,7x**Tr**. Mieux, le ratio **R**/(2,7x**Tr**) doit être inférieur ou égal à 0,90 et, mieux encore à 0,80. Cependant, compte tenu de l'ensemble des exigences de caractéristiques souhaitées pour l'acier, cette grandeur ne peut, en général, pas descendre en dessous de 11 aussi, l'invention concerne plus particulièrement les aciers pour lesquels **R** > 11, tout en étant le plus faible possible.

- Compte tenu de toutes les contraintes, la somme Mo* + 3xV* doit être supérieure à 0,4% ; lorsque la composition de l'acier correspond à l'analyse préférentielle :

$$0,230 \% \leq C \leq 0,350 \%$$

$$Si \leq 0,30 \%$$

$$0,1 \% < Mn \leq 1,8 \%$$

$$Ni \leq 2,5 \%$$

$$0,2 \% \leq Cr \leq 3 \%$$

$$Mo + W/2 \leq 2,5 \%$$

$$V + Nb/2 + Ta/4 \leq 0,3\%$$

Mo* + 3xV* doit être supérieur à 0,8% ; lorsque l'acier correspond à l'analyse plus préférentielle :

$$0,240 \% \leq C \leq 0,320 \%$$

$$Si \leq 0,15\%$$

$$0,1\% \leq Mn \leq 1,6\%$$

$$Ni \leq 2\%$$

$$0,2\% \leq Cr \leq 2,5\%$$

$$0,3\% \leq Mo + W/2 \leq 2,5\%$$

$$V + Nb/2 + Ta/4 \leq 0,3\%$$

Mo* + 3xV* doit être supérieur à 1,2%.

Pour fabriquer un moule avec cet acier, on élabore l'acier, on le coule et on le lamine ou on le forge à chaud de façon connue et on le découpe pour obtenir des blocs de dont l'épaisseur est supérieure à 20 mm et peut dépasser 100mm et atteindre 400mm, voire 600mm, et même 1500 mm. A noter que, pour les épaisseurs les moins importantes, les blocs peuvent être des tôles ou des larges plats, et que pour les plus fortes épaisseurs, ce sont, en général, des blocs forgés.

Les blocs sont austénitisés, éventuellement dans la chaude de forgeage ou de laminage, à une température supérieure à $AC_3$ et de préférence inférieure à 950°C, puis ils sont trempés à l'air, l'huile ou l'eau selon l'épaisseur et la trempabilité de l'acier, de façon à obtenir une structure martensitique ou martensito-bainitique dans toute la masse. Enfin, ils sont revenus à une température supérieure à 500°C et, de préférence, au moins égale à 550°C, mais inférieure à $AC_1$. On obtient ainsi une dureté comprise entre 430HB et 530HB environ.

Dans de tels blocs, on usine de façon connue des pièces de moules comportant des empreintes qui sont polies et éventuellement grainées. Eventuellement, ces pièces sont durcies en surface, par exemple par nitruration gazeuse. Après nitruration gazeuse, hormis l'extrême surface des pièces qui est nitrurée, la dureté de l'acier reste comprise entre 430HB et 530HB environ.

A titre d'exemple et de comparaison, on considère les analyses rapportées au tableau 1, dont certaines caractéristiques sont reportées au tableau 2.

Les exemples 9, 10 et 12 sont conformes à l'invention, les aciers 1 à 6, 11 et 14 à 16 ne contiennent pas de bore, les exemples 17, 18, 20 et 21 sont donnés à titre de comparaison. Ces aciers ne contiennent pas d'additions de sélénium, tellure, plomb, bismuth ou calcium. Ils contiennent cependant un peu de soufre, entre 0,010% et 0,020%.

Pour tous ces aciers, on a également déterminé la dureté HB à l'état trempé revenu, c'est à dire pour une structure martensitique ou martensito-bainitique revenue à 550°C, ainsi que la dureté HVZAT en zone affectée par la chaleur au voisinage d'une soudure qu'on a comparé à la dureté HVbase du métal de base non affecté par la chaleur. Ces résultats sont reportés également au tableau 1.

Au vu de ces deux tableaux, on peut constater, qu'à dureté comparable (HB) et coefficient de dureté **Dr** comparable, les aciers selon l'invention ont une usinabilité meilleure (ratio **U/Dr** plus faible) que les aciers donnés à titre de comparaison. En outre, ils ont une aptitude à la réparation par soudure meilleure et surtout une réponse homogène au polissage après réparation bien meilleure que celle des aciers donnés à titre de comparaison, puisque la dureté en ZAT est plus faible et surtout que le rapport HVZAT/HVbase est plus faible. Pour les aciers selon l'invention, le rapport HVZAT/HVbase ne dépasse pas en effet 1,20 lorsque le carbone est inférieur ou égal à 0,35%.

Tableau 1

|   | C | Si | Mn | Ni | Cr | Mo | W | V | Nb | Cu | B* | Al* | Ti* | N* |
|---|---|----|----|----|----|----|---|---|----|----|----|-----|-----|-----|
| 1 | 0,25 | 0,15 | 1,3 | 0 | 2,1 | 1 | 0 | 0,3 | 0 | 0,2 | | 25 | | 6 |
| 2 | 0,24 | 0,13 | 1,2 | 0,3 | 2,5 | 1 | 0,9 | 0,26 | 0,1 | 0,2 | | 4 | | 8 |
| 3 | 0,2 | 0,1 | 1,3 | 1 | 2 | 1,1 | 0,8 | 0,3 | 0 | 0,2 | | 19 | | 4 |
| 4 | 0,25 | 0,15 | 1 | 0,2 | 2 | 2,1 | 0 | 0,3 | 0 | 0,3 | | 35 | | 5 |
| 5 | 0,28 | 0,15 | 1 | 0,2 | 3,3 | 1,8 | 1,5 | 0,3 | 0 | 0,2 | | 22 | | 5 |
| 6 | 0,29 | 0,04 | 1,2 | 1,2 | 2,1 | 1 | 0 | 0,16 | 0,28 | 0,02 | | 27 | 12 | 6 |
| 9 | 0,35 | 0,15 | 0,7 | 1 | 1,3 | 1,5 | 0 | 0,28 | 0 | 0,3 | 2 | 65 | | 5 |

*le bore, l'azote, le titane et l'aluminium sont exprimés en millièmes de %.

Tableau 1   (suite)

|    | C | Si | Mn | Ni | Cr | Mo | W | V | Nb | Cu | B* | Al* | Ti* | N* |
|----|---|----|----|----|----|----|---|---|----|----|----|-----|-----|----|
| 10 | 0,35 | 0,15 | 1,4 | 1,5 | 1,5 | 1,5 | 0 | 0,28 | 0 | 0,2 | 2 | 14 | 22 | 6 |
| 11 | 0,28 | 0,12 | 0,7 | 1,2 | 2,2 | 1,6 | 0 | 0,2 |  | 0,3 |  | 18 |  | 3 |
| 12 | 0,31 | 0,12 | 0,2 | 1,2 | 2,2 | 1,6 | 0 | 0,2 | 0 | 0,1 | 3 | 32 | 18 | 5 |
| 14 | 0,38 | 0,13 | 1,3 | 0,2 | 2,9 | 1,5 | 0 | 0,1 | 0 | 0,2 |  | 21 |  | 9 |
| 15 | 0,39 [2] | 0,05 | 1,3 | 1,8 | 2 | 1,55 | 0 | 0,09 |  | 0,2 |  | 27 |  | 2 |
| 16 | 0,39 | 0,03 | 1,3 | 1,5 | 3,2 | 0,8 | 0 | 0,1 |  | 0,3 |  | 25 |  | 3 |
| 17 | 0,39 | 0,3 | 0,63 | 0,1 | 1,5 | 0,45 | 0 | 0,42 | 0 | 0,1 |  | 18 |  | 4 |
| 18 | 0,38 | 1 | 0,4 | 0,2 | 5 | 1,25 | 0 | 0,34 | 0 | 0,1 |  | 22 |  | 5 |
| 20 | 0,34 | 0,25 | 0,8 | 0,2 | 0,5 | 0,5 | 0 | 0,6 | 0 | 0,3 |  | 12 |  | 7 |
| 21 | 0,39 | 0,45 | 0,57 | 0,1 | 3,2 | 0,7 | 0 | 0,24 | 0 | 0,2 |  | 15 |  | 5 |

*le bore, l'azote, le titane et l'aluminium sont exprimés en millièmes de %.

Tableau 2

|    | Tr | Dr | U | R | R/2,7Tr | U/Dr | HB | HVZAT | HVZAT/ HVbase |
|----|----|----|---|---|---------|------|----|-------|----------------|
| 1  | 4,74 | 84,7 | 688 | 11,1 | 0,87 | 8,12 | 440 | 542 | 1,12 |
| 2  | 5,78 | 86,9 | 731 | 12,4 | 0,8 | 8,41 | 460 | 540 | 1,07 |
| 3  | 6,09 | 85,3 | 655 | 13,4 | 0,81 | 7,68 | 443 | 500 | 1,03 |
| 4  | 6,25 | 88,6 | 795 | 12 | 0,71 | 8,97 | 472 | 539 | 1,04 |
| 5  | 7,8 | 92,7 | 921 | 14,5 | 0,69 | 9,93 | 515 | 588 | 1,04 |
| 6  | 5,54 | 86,7 | 752 | 12,7 | 0,85 | 8,67 | 460 | 586 | 1,16 |
| 9  | 5,78 | 88,4 | 869 | 11,5 | 0,73 | 9,82 | 477 | 626 | 1,19 |
| 10 | 7,02 | 90,3 | 874 | 15,3 | 0,8 | 9,67 | 493 | 641 | 1,18 |
| 11 | 5,99 | 87,2 | 753 | 12,8 | 0,79 | 8,64 | 462 | 574 | 1,13 |
| 12 | 6 | 87,4 | 801 | 11,2 | 0,69 | 9,17 | 462 | 597 | 1,18 |
| 14 | 6,39 | 89,5 | 876 | 13,7 | 0,79 | 9,78 | 485 | 679 | 1,27 |
| 15 | 7,07 | 89,8 | 870 | 15,6 | 0,82 | 9,68 | 493 | 685 | 1,26 |
| 16 | 6,38 | 86,9 | 829 | 15,3 | 0,89 | 9,54 | 455 | 701 | 1,4 |
| 17 | 3,09 | 86,6 | 896 | 9,53 | 1,14 | 10,3 | 460 | 663 | 1,31 |
| 18 | 6,26 | 93,6 | 1011 | 22 | 1,3 | 10,8 | 530 | 727 | 1,25 |
| 20 | 2,73 | 85,4 | 877 | 8,31 | 1,13 | 10,3 | 442 | 601 | 1,24 |
| 21 | 4,44 | 87,4 | 882 | 13,6 | 1,13 | 10,1 | 465 | 694 | 1,36 |

Ces aciers sont aptes à la fabrication de pièces de moules d'injection de matières plastiques. Mais ils sont aptes également à la fabrication de pièces d'outillage pour le travail des métaux.

**Revendications**

1.   Bloc en acier destiné à la fabrication de moules pour l'injection de matière plastique ou pour le moulage de métaux ou pour la fabrication de pièces pour le travail des métaux, d'épaisseur supérieure à 20 mm, dont la structure est entièrement martensitique ou martensito-bainitique, dont la dureté en tous points est comprise entre 430 HB et 530 HB et dont la composition chimique de l'acier comprend, en % en poids :

$$0,180\% \leq C \leq 0,400\%$$

$$Si \leq 0,8\%$$

$$Mn \leq 2,5\%$$

$$Ni \leq 3\%$$

$$Cr \leq 3,5\%$$

$$Mo+W/2 \leq 2,8\%$$

$$V + Nb/2 + Ta/4 \leq 0,5\%$$

$$Al \leq 0,4\%$$

$$Ti + Zr/2 \leq 0,1\%$$

- du bore en une teneur comprise entre 0,0005% et 0,015%,
- éventuellement un ou plusieurs éléments pris parmi le soufre, le sélénium et le tellure, la somme des teneurs en ces éléments étant inférieure ou égale à 0,2%,
- éventuellement un ou plusieurs éléments pris parmi le plomb et le bismuth, la somme des teneurs en ces éléments étant inférieure ou égale à 0,2%,
- éventuellement du calcium en une teneur inférieure ou égale à 0,1%,

le reste étant du fer et des impuretés résultant de l'élaboration, le cuivre étant une impureté, la composition chimique satisfaisant en outre les relations suivantes :

$$3,2 \leq Tr \leq 9$$

$$85 \leq Dr \leq 95$$

$$U/Dr \leq 10,0$$

$$Mo^* + 3xV^* \geq 0,4\%$$

dans lesquelles, pour des teneurs exprimées en%, :

$$Tr = 1,8xC + 1,1xMn +0,7xNi + 0,6xCr + 1,6xMo^* + 0,5$$

$$Dr = 54xC^{0,25} + 24,5x(Mo^* + 3xV^*)^{0,30} + 1,58xMn + 0,74xNi + 1,8xSi + 12,5x(Cr)^{0,20}$$

$$U = 1600xC + 1\ 00x(0,25xCr + Mo^* + 4,5xV^*)$$

$$R = 3,8xC + 10xSi + 3,3xMn + 2,4xNi + 1,4x(Cr + Mo^*)$$

$$Mo^* = Mo + W/2$$

$$V^* = V + Nb/2 + Ta/4$$

Les teneurs en bore, aluminium, titane, zirconium et azote, exprimées en millièmes de % en poids, étant telles que :

$$B \geq \frac{1}{3} \times K1 + 0,5$$

avec K1 = Min (I* ; J*)
   I*= Max(0 ; I)        et        J* = Max(0 ; J)
   I = Min(N ; N-0,29(Ti+Zr/2-5))

$$J = \quad Min\left( N\ ;\ 0,5\left( N - 0,52\ Al + \sqrt{(N - 0,52\,Al)^2 + 283}\ \right) \right).$$

**2.** Bloc en acier selon la revendication 1, dont la composition chimique est telle que :

$$R > 11$$

**3.** Bloc en acier selon la revendication 1 ou la revendication 2, **caractérisé en ce que** :

$$R \leq 2,7xTr$$

**4.** Bloc en acier selon l'une quelconque des revendications 1 à 3, **caractérisé en ce que** la teneur en silicium est strictement inférieure à 0,45% en poids et la teneur en carbone inférieure ou égale à 0,35% en poids.

**5.** Bloc en acier selon l'une quelconque des revendications 1 à 4, **caractérisé en ce que R** / (2,7x**Tr**) $\leq$ 0,90.

**6.** Bloc en acier selon la revendication 5, **caractérisé en ce que R** / (2,7x**Tr**) $\leq$ 0,80

**7.** Bloc en acier selon l'une quelconque des revendications 1 à 6, **caractérisé en ce que U/Dr** < 9,0.

**8.** Bloc en acier selon la revendication 7, **caractérisé en ce que** sa composition est telle que :

$$0,230\ \% \leq C \leq 0,350\ \%$$

$$Si \leq 0,30\ \%$$

EP 1 490 526 B1

$$0,1\% \leq Mn \leq 1,8\ \%$$

$$Ni \leq 2,5\ \%$$

$$0,2\ \% \leq Cr \leq 3,0\ \%$$

$$Mo + W/2 \leq 2,5\ \%$$

$$V + Nb/2 + Ta/4 \leq 0,3\ \%$$

$$Mo^* + 3xV^* \geq 0,8\%$$

**9.** Bloc en acier selon la revendication 8, **caractérisé en ce que** sa composition est telle que :

$$0,240\ \% \leq C \leq 0,320\ \%$$

$$Si \leq 0,15\ \%$$

$$0,1\ \% \leq Mn \leq 1,6\%$$

$$Ni \leq 2,0\ \%$$

$$0,2\ \% \leq Cr \leq 2,5\ \%$$

$$0,3\ \% \leq Mo + W/2 \leq 2,5\ \%$$

$$V + Nb/2 + Ta/4 \leq 0,3\ \%$$

$$Mo^* + 3xV^* \geq 1,2\%$$

**10.** Bloc en acier selon la revendication 8 ou 9, **caractérisé en ce que Tr** > 4,5.

**11.** Pièce de moule en acier usinée dans un bloc conforme à l'une quelconque des revendications 1 à 10, dont au moins une partie de la surface est durcie par nitruration et dont la dureté en tous points est comprise entre 430HB et 530HB.

**Patentansprüche**

**1.** Blockstahl, bestimmt zur Herstellung von Spritzgussformen für Kunststoffmaterialien oder zur Formung von Metallen oder zur Herstellung von Werkstücken für die Metallbearbeitung, von einer Stärke oberhalb 20 mm, dessen Struktur vollständig martensitisch oder martensitisch-bainitisch ist, dessen Härte an allen Punkten zwischen 430 HB und 530 HB ist und dessen chemische Zusammensetzung des Stahles in Gew.-% beträgt:

$$0{,}180\% \leq C \leq 0{,}400\%$$

$$Si \leq 0{,}8\%$$

$$Mn \leq 2{,}5\%$$

$$Ni \leq 3\%$$

$$Cr \leq 3{,}5\%$$

$$Mo+W/2 \leq 2{,}8\%$$

$$V + Nb/2 + Ta/4 \leq 0{,}5\%$$

$$Al \leq 0{,}4\%$$

$$Ti + Zr/2 \leq 0{,}1\%$$

- Bor mit einem Gehalt zwischen 0,0005 % und 0,015 %
- gegebenenfalls ein oder mehrere Elemente, ausgewählt unter Schwefel, Selen und Tellur, wobei die Summe der Gehalte dieser Elemente unter oder gleich 0,2 % ist,
- gegebenenfalls ein oder mehrere Elemente, ausgewählt unter Blei und Wismut, wobei die Summe der Gehalte dieser Elemente unter oder gleich 0,2 % ist,
- gegebenenfalls Calcium mit einem Gehalt unterhalb oder gleich 0,1 %,

wobei der Rest aus Eisen und aus der Verabeitung herrührenden Verunreinigungen, wobei Kupfer eine Verunreinigung ist, besteht, wobei die chemische Zusammensetzung ausserdem die folgenden Beziehungen erfüllt:

$$3{,}2 \leq Tr \leq 9$$

$$85 \leq Dr \leq 95$$

$$U/Dr \leq 10$$

$$Mo^* + 3xV^* \geq 0{,}4\ \%$$

worin für die in % ausgedrückten Gehalte:

$$Tr = 1{,}8xC + 1{,}1xMn + 0{,}7xNi + 0{,}6xCr + 1{,}6xMo^* + 0{,}5$$

$$Dr = 54xC^{0{,}25} + 24{,}5x(Mo^* + 3xV^*)^{0{,}30} + 1{,}58xMn + 0{,}74xNi + 1{,}8xSi + 12{,}5x(Cr)^{0{,}20}$$

$$U = 1600xC + 100x(0,25xCr + Mo^* + 4,5xV^*)$$

$$R = 3,8xC + 10xSi + 3,3xMn + 2,4xNi + 1,4x(Cr + Mo^*)$$

$$Mo^* = Mo + W/2$$

$$V^* = V + Nb/2 + Ta/4$$

wobei die Gehalte an Bor, Aluminium, Titan, Zirkonium und Stickstoff, ausgedrückt in Tausendstel von % in Gewicht derart sind, daß

$$B \geq \frac{1}{3} \times K1 + 0,5$$

mit K1 = Min (I* ; J*)

I* = Max (0 ; I)       und       J* = Max(0 ; J)

I = Min(N ; N-0,29(Ti+Zr/2-5))

$$J = Min\left( N \; ; 0,5\left( N - 0,52 \; Al + \sqrt{(N - 0,52\,Al)^2 + 283} \right) \right).$$

2. Blockstahl nach Anspruch 1, dessen chemische Zusammensetzung derart ist, daß:

$$R > 11$$

ist.

3. Blockstahl nach Anspruch 1 oder Anspruch 2, **dadurch gekennzeichnet, daß**

$$R \leq 2,7xTr$$

ist.

4. Blockstahl nach irgendeinem der Ansprüche 1 bis 3, **dadurch gekennzeichnet, daß** der Gehalt an Silizium strikt unter 0,45 Gew.-% und der Gehalt an Kohlenstoff unter oder gleich 0,35 Gew.-% ist.

5. Blockstahl nach irgendeinem der Ansprüche 1 bis 4, **dadurch gekennzeichnet, daß**

$$R / (2,7xTr) \leq 0,90$$

ist.

6. Blockstahl nach Anspruch 5, **dadurch gekennzeichnet, daß**

$$R/(2,7xTr) \leq 0,80$$

ist.

7.  Blockstahl nach irgendeinem der Ansprüche 1 bis 6, **dadurch gekennzeichnet, daß**

$$U/Dr < 9{,}0$$

ist.

8.  Blockstahl nach Anspruch 7, **dadurch gekennzeichnet, daß** seine Zusammensetzung derart ist, daß:

$$0{,}230\ \% \leq C \leq 0{,}350\ \%$$

$$Si \leq 0{,}30\ \%$$

$$0{,}1\% \leq Mn \leq 1{,}8\ \%$$

$$Ni \leq 2{,}5\ \%$$

$$0{,}2\ \% \leq Cr \leq 3{,}0\ \%$$

$$Mo + W/2 \leq 2{,}5\ \%$$

$$V + Nb/2 + Ta/4 \leq 0{,}3\ \%$$

$$Mo^* + 3xV^* \geq 0{,}8\%.$$

9.  Blockstahl nach Anspruch 8, **dadurch gekennzeichnet, daß** seine Zusammensetzung derart ist, daß:

$$0{,}240\ \% \leq C \leq 0{,}320\ \%$$

$$Si \leq 0{,}15\ \%$$

$$0{,}1\ \% \leq Mn \leq 1{,}6\ \%$$

$$Ni \leq 2{,}0\ \%$$

$$0{,}2\ \% \leq Cr \leq 2{,}5\ \%$$

$$0{,}3\ \% \leq Mo + W/2 \leq 2{,}5\ \%$$

$$V + Nb/2 + Ta/4 \leq 0{,}3\ \%$$

$$Mo^* + 3xV^* \geq 1{,}2\%.$$

**10.** Blockstahl nach Anspruch 8 oder 9, **dadurch gekennzeichnet, daß**

$$Tr > 4,5$$

ist.

**11.** Formteil aus Stahl, verarbeitet zu einem Block entsprechend einem der Ansprüche 1 bis 10, von dem wenigstens ein Teil der Oberfläche durch Nitrieren gehärtet ist und dessen Härte an allen Stellen zwischen 430 HB und 530 HB beträgt.

**Claims**

**1.** Steel block for the production of moulds for the injection of plastic material or for the moulding of metals or for the production of parts for working metals, with a thickness greater than 20 mm, the structure of which is entirely martensitic or martensitic-bainitic, the hardness of which, throughout, is between 430 HB and 530 HB inclusive and the chemical composition of the steel of which comprises, in wt.%:

$$0.180\% \leq C \leq 0.400\%$$

$$Si \leq 0.8\%$$

$$Mn \leq 2.5\%$$

$$Ni \leq 3\%$$

$$Cr \leq 3.5\%$$

$$Mo+W/2 \leq 2.8\%$$

$$V + Nb/2 + Ta/4 \leq 0.5\%$$

$$Al \leq 0.4\%$$

$$Ti + Zr/2 \leq 0.1\%$$

- boron in a content of between 0.0005% and 0.015% inclusive,
- optionally one or more elements selected from sulfur, selenium and tellurium, the sum of the contents of these elements being less than or equal to 0.2%,
- optionally one or more elements selected from lead and bismuth, the sum of the contents of these elements being less than or equal to 0.2%,
- optionally calcium in a content less than or equal to 0.1%,

the remainder being iron and impurities resulting from manufacture, copper being an impurity, the chemical composition additionally fulfilling the following relationships:

$$3.2 \leq Tr \leq 9$$

$$85 < Dr \leq 95$$

$$U/Dr \leq 10.0$$

$$Mo^* + 3xV^* \geq 0.4\%$$

in which, for contents expressed in %:

$$Tr = 1.8xC + 1.1xMn + 0.7xNi + 0.6xCr + 1.6xMo^* + 0.5$$

$$Dr = 54xC^{0.25} + 24.5x(Mo^*+3xV^*)^{0.30} + 1.58xMn + 0.74xNi + 1.8xSi +$$

$$12.5x(Cr)^{0.20}$$

$$U = 1600xC + 100x(0.25xCr + Mo^* + 4.5xV^*)$$

$$R = 3.8xC + 10xSi + 3.3xMn + 2.4xNi + 1.4x(Cr + Mo^*)$$

$$Mo^* = Mo + W/2$$

$$V^* = V + Nb/2 + Ta/4$$

The contents of boron, aluminium, titanium, zirconium and nitrogen, expressed as thousandths of a % by weight, being such that:

$$B \geq \frac{1}{3} \times K1 + 0.5$$

with $Kl = \min(I^*; J^*)$
$I^* = \max(O; I)$ and $J^* = \max(O; J)$
$I = \min(N; N - 0.29(Ti + Zr/2-5))$
$J = \min(N; 0.5(N - 0.52\,Al + \sqrt{(N - 0.52\,Al)^2 + 283}\,))$.

2. Steel block according to claim 1, the chemical composition of which is such that:

$$R > 11$$

3. Steel block according to claim 1 or claim 2, **characterised in that**:

$$R \leq 2.7 \times Tr$$

4. Steel block according to any one of claims 1 to 3, **characterised in that** the silicon content is strictly less than 0.45 wt.% and the carbon content less than or equal to 0.35 wt.%.

5. Steel block according to any one of claims 1 to 4, **characterised in that** $R / (2.7 \times Tr) \leq 0.90$.

6. Steel block according to claim 5, **characterised in that** $R / (2.7 \times Tr) \leq 0.80$.

7. Steel block according to any one of claims 1 to 6, **characterised in that** U/Dr < 9.0.

8. Steel block according to claim 7, **characterised in that** its composition is such that:

$$0.230\% \leq C \leq 0.350\%$$

$$Si \leq 0.30\%$$

$$0.1\% \leq Mn \leq 1.8\%$$

$$Ni \leq 2.5\%$$

$$0.2\% \leq Cr \leq 3.0\%$$

$$Mo + W/2 \leq 2.5\%$$

$$V + Nb/2 + Ta/4 \leq 0.3\%$$

$$Mo^* + 3xV^* \geq 0.8\%$$

9. Steel block according to claim 8, **characterised in that** its composition is such that:

$$0.240\% \leq C \leq 0.320\%$$

$$Si \leq 0.15\%$$

$$0.1\% \leq Mn \leq 1.6\%$$

$$Ni \leq 2.0\%$$

$$0.2\% \leq Cr \leq 2.5\%$$

$$0.3\% \leq Mo + W/2 \leq 2.5\%$$

$$V + Nb/2 + Ta/4 \leq 0.3\%$$

$$Mo^* + 3xV^* \geq 1.2\%$$

10. Steel block according to claim 8 or 9, **characterised in that** Tr > 4.5.

11. Mould part made of steel machined in a block according to any one of claims 1 to 10, at least part of the surface of which is hardened by nitriding and the hardness of which, throughout, is between 430 HB and 530 HB inclusive.